# FASCICULE DE BREVET EUROPEEN

(11) **EP 4 340 993 B1**
(45) Date de publication et mention de la délivrance du brevet: **09.07.2025**
(21) Numéro de dépôt: 22729468.3
(22) Date de dépôt: 12.05.2022
(51) Int. Cl.: B01J 29/74, B01J 35/30, C01B 39/48, B01D 53/94, B01J 20/18, B01J 20/30, C01B 39/02

(54) **SYNTHESE D'UN CATALYSEUR A BASE DE ZEOLITHE AFX CONTENANT DU PALLADIUM POUR L'ADSORPTION DES NOX**
SYNTHESE EINES PALLADIUMHALTIGEN AFX-ZEOLITHKATALYSATORS ZUR NOX-ADSORPTION
SYNTHESIS OF A PALLADIUM-BEARING AFX ZEOLITE CATALYST FOR NOX ADSORPTION

(30) Priorité: 21.05.2021 FR 2105314
(43) Date de publication de la demande: 27.03.2024
(73) Titulaire: IFP Energies nouvelles, 92500 Rueil-Malmaison (FR)
(72) Inventeur: BERTHOUT, David, 92852 RUEIL-MALMAISON CEDEX (FR); MARTINEZ-FRANCO, Raquel, 92852 RUEIL-MALMAISON CEDEX (FR); BOUALLEG, Malika, 92852 RUEIL-MALMAISON CEDEX (FR); HARBUZARU, Bogdan, 92852 RUEIL-MALMAISON CEDEX (FR)
(74) Mandataire: IFP Energies nouvelles
(86) Numéro de dépôt international: PCT/EP2022/062937
(87) Numéro de publication internationale: WO 2022/243164

(56) Documents cités:
- WO-A1-2019/224086
- FR-A1- 3 095 130
- US-A1- 2016 136 626
- US-A1- 2020 246 784

## Description

### DOMAINE TECHNIQUE

L'invention se rapporte à un procédé de préparation d'un catalyseur contenant du palladium à base d'une zéolithe de type structural AFX, le catalyseur préparé ou susceptible d'être préparé par le procédé selon l'une quelconque de ses variantes, et son utilisation en tant qu'adsorbeur passif de NOx, en particulier sur les moteurs à combustion interne.

### TECHNIQUE ANTERIEURE

Les émissions d'oxydes d'azote (NOx) qui résultent de la combustion de combustibles fossiles sont une préoccupation majeure pour la société. Des normes de plus en plus sévères sont mises en place par les instances gouvernementales afin de limiter l'impact des émissions issues de la combustion sur l'environnement et sur la santé. La réduction catalytique sélective, désignée par l'acronyme anglo-saxon « SCR » pour « Selective Catalytic Reduction », apparaît comme une technologie efficace pour éliminer les oxydes d'azote dans les gaz d'échappement riches en oxygène, typiques des moteur Diesel et à allumage commandé en mélange pauvre. La réduction catalytique sélective est réalisée grâce à un réducteur, généralement l'ammoniac, et peut ainsi être désignée par NH₃-SCR. Les zéolithes échangées avec des métaux de transition sont notamment utilisées comme catalyseurs pour les applications NH₃-SCR, dans les transports. Les zéolithes à petit pores, en particulier les chabazites échangées au cuivre, sont particulièrement adaptées. Pour les moteurs à allumage commandé qui fonctionnent à la stœchiométrie, les catalyseurs trois voies (TWC) sont très efficaces pour réduire les NOx lorsque leur formulation est adaptée.

Cependant, pendant un démarrage à froid ou plus généralement lorsque les températures à l'échappement sont inférieures à 180-200°C, aucun des deux systèmes ne peut traiter efficacement les émissions de NOx. En effet, la décomposition de la solution d'urée aqueuse qui nécessite des températures supérieures à 180°C limite l'efficacité NH₃-SCR et pour ce qui est du catalyseur TWC une optimisation de l'activité basse température est toujours possible, mais semble tout de même très difficile à atteindre.

Les dispositifs capables de stocker les NOx à basses températures et de les libérer thermiquement offrent la possibilité de remédier au manque d'efficacité des systèmes SCR et TWC aux basses températures. Si le concept n'est pas nouveau, proposé par Ford Global Technologies LLC (U.S. Patent No.6,182,443) et BASF Catalysts LCC (U.S. Patent No.6,471,924) dans la fin des années 1990, les travaux récents ont mis en évidence qu'il s'agissait d'une des technologies les plus prometteuses pour la limitation des émissions de NOx au démarrage à froid. Ces systèmes sont souvent appelés adsorbeurs passifs de NOx ou PNA (Passive NOx Adsorber). Différents matériaux ont été évalués ces derniers temps pour l'adsorption et la désorption des NOx.

Dans le cadre d'un concept de démarrage à froid, Johnson Matthey Inc propose un adsorbeur à base de Palladium dispersé sur un oxyde de Cérium, un oxyde mixte ou un oxyde composite à base de Cérium peut être régénéré thermiquement (U.S. Patent No.8,105,559).

Le brevet US 2015/01580 19 A1 décrit l'utilisation d'une zéolithe avec un métal du groupe du platine en tant qu'adsorbeur en particulier l'utilisation d'une zéolithe de type CHA ou AEI. Différentes structures zéolithiques ont été explorées. L'adsorbeur passif de NOx comprend un métal noble et un tamis moléculaire ayant une structure de type OFF (US20190217269A1), de type MAZ (WO2016135465A1), de type LTL (WO2017/001828) ou de type STI (WO 2019/186163 A1). Le brevet WO 2020039015 A1 décrit un adsorbeur passif de NOx qui comprend une zéolithe 12MR et 8MR telles que la zéolithe de structure MOZ (ZSM-10) et qui contient du Palladium.

Le brevet US 2020/0061595A1 présente des adsorbeurs de NOx passifs à base de matériaux zéolithiques à petits pores avec des métaux de transition dispersés de manière atomique dans la microporosité. Les chargements de métaux élevés atomiquement dispersés dans les micropores d'une zéolite à petits pores, en particulier de type SSZ-13 (CHA), confèrent des propriétés d'adsorption importantes.

Les zéolithes de type structural AFX apparaissent dans la liste des zéolithes à petits pores qui peuvent être utilisés pour l'adsorption des NOx décrite dans les demandes de brevets WO 2015/085303 A1 et WO2016/135465A1. Cependant aucune de ces demandes de brevets ne met en avant l'avantage que confère cette structure, en particulier en fonction de son mode de synthèse.

La demande de brevet WO2019/224088 décrit la synthèse d'une zéolithe de type structural AFX avec des rapports molaires SiO₂/Al₂O₃ compris entre 4 et 100, de préférence entre 6 et 80 en utilisant les structurants organiques 1,5-bis(methylpiperidinium) pentane, 1,6-bis(methylpiperidinium) hexane ou 1,7-bis (methylpiperidinium) heptane sous leur forme dihydroxyde et comme source de silicium et aluminium des zéolithes de type FAU avec des rapports molaires SiO₂/Al₂O₃ compris entre 6 et 200. Le document FR-A-3 095 130 décrit une autre méthode de synthèse d'une zéolithe AFX.

K.G Strohmaier et al. (Exxon Mobil, WO2017202495A1) ont utilisé la molécule organique 1,1'-(hexane-1,6-dyil)bis(1-méthylpipéridinium) en présence d'un complexe métallique [Rh(C₂H₄N₂)₃Cl₃-3H₂O stabilisé par des ligands d'amine pour obtenir une zéolithe de type structural AFX avec une durée de cristallisation allant de 1 jour à environ 100 jours.

La demanderesse a découvert qu'un nouveau catalyseur à base d'une zéolithe de type structural AFX préparé selon un mode de synthèse particulier et contenant du palladium présente non seulement une capacité totale de stockage des NOx augmentée, mais aussi une température de désorption des NOx plus élevée par rapport à l'art antérieur. De plus, ce catalyseur présente une stabilité hydrothermale élevée qui lui permet d'être utilisé dans les conditions sévères d'un échappement automobile.

### RESUME DE L'INVENTION

L'invention concerne un procédé de préparation d'un catalyseur zéolithique comprenant une zéolithe de type structural AFX et du palladium, comprenant au moins les étapes suivantes :
i) le mélange en milieu aqueux, d'une zéolithe de type structural FAU ayant un ratio molaire total SiO_{2(FAU)}/Al₂O_{3(FAU)} compris entre 6 et 100, bornes incluses, d'un composé organique azoté MPC6, MPC6 étant le dihydroxyde de 1,6-bis(méthylpiperidinium)hexane, d'au moins une source de cations sodium, le mélange réactionnel présentant la composition molaire suivante :
   (SiO_{2(FAU)})/(Al₂O_{3(FAU)}) compris entre 6 et 100,
   H₂O/(SiO_{2(FAU)}) compris entre 5 et 60,
   MPC6/(SiO_{2(FAU)}) compris entre 0,05 et 0,50,
   Na₂O/(SiO_{2 (FAU)}) compris entre 0,05 et 0,25, bornes incluses,
   SiO_{2 (FAU)} désigne la quantité de SiO₂ apportée par la(les) zéolithe(s) FAU, et Al₂O_{3 (FAU)} désigne la quantité de Al₂O₃ apportée par la(les) zéolithe(s) FAU, jusqu'à l'obtention d'un gel précurseur homogène ;
ii) le traitement hydrothermal dudit gel précurseur obtenu à l'issue de l'étape i) à une température comprise entre 120°C et 220°C, pendant une durée comprise entre 12h et 15 jours pour obtenir une zéolithe AFX
iii) une étape de filtration, lavage et séchage de ladite zéolithe AFX obtenue à l'issue de l'étape ii), ledit séchage étant réalisé à une température comprise entre 60 et 120°C, pendant une durée comprise entre 5 et 24 heures pour obtenir une zéolithe AFX séchée, suivie d'une calcination de ladite zéolithe AFX séchée à une température comprise entre 500 et 700°C pendant une durée comprise entre 2 et 20 heures, la calcination pouvant être précédée d'une montée en température progressive, pour obtenir une zéolithe AFX calcinée ;
iv) iv) au moins une étape d'échange ionique de ladite zéolithe de type structural AFX calcinée obtenue à l'étape iii) comprenant la mise en contact de ladite zéolithe AFX calcinée obtenue à l'étape iii), avec une solution contenant des cations ammonium, de préférence du nitrate d'ammonium, sous agitation à une température comprise entre 20 et 95°C, de préférence entre 60 et 85°C pendant une durée comprise entre 1 heure et 2 jours pour obtenir une zéolithe AFX calcinée sous forme ammonium, qui est de nouveau séchée à une température comprise entre 60 et 120°C ;
v) dépôt d'une solution de palladium sur ladite zéolithe AFX calcinée sous forme ammonium et séchée.

La solution de palladium peut être déposée à l'étape v) par imprégnation à sec ou par voie colloïdale.

Le mélange réactionnel de l'étape i) peut comprendre au moins une source additionnelle de silicium sous forme oxyde SiO₂ notée SiO₂ (c), de sorte que le ratio molaire SiO_{2 (c)}/SiO_{2 (FAU)} soit compris entre 0,001 et 0,01, bornes incluses, la teneur en SiO_{2 (FAU)} dans ledit ratio étant la teneur apportée par la zéolithe de type structural FAU, le mélange réactionnel de l'étape i) ayant la composition molaire suivante :
(SiO_{2(c)} + SiO_{2 (FAU)}) /Al₂O_{3 (FAU)} compris entre 6 et 100
H₂O/(SiO_{2(c)} + SiO_{2 (FAU)}) compris entre 5 et 60
MPC6/(SiO_{2(c)} + SiO_{2 (FAU)}) compris entre 0,05 et 0,50
Na₂O/(SiO_{2(c)} + SiO_{2 (FAU)}) compris entre 0,05 et 0,25, bornes incluses.

Le mélange réactionnel de l'étape i) peut comprendre au moins une source additionnelle d'aluminium sous forme oxyde notée : Al₂O_{3 (c)}, de sorte que le ratio molaire Al₂O_{3 (c)} /Al₂O_{3 (FAU)} soit compris entre 0,001 et 8, bornes incluses, le mélange réactionnel de l'étape i) ayant la composition molaire suivante :
SiO_{2 (FAU)}/(Al₂O_{3 (FAU)} + Al₂O_{3 (C)}) compris entre 6 et 100, bornes incluses
H₂O/SiO_{2 (FAU)} compris entre 5 et 60
MPC6/SiO_{2 (FAU)} compris entre 0,05 et 0,50
Na₂O/SiO_{2 (FAU)} compris entre 0,05 et 0,25, bornes incluses,
SiO_{2 (FAU)} étant la quantité de SiO₂ apportée par la zéolithe FAU, Al₂O_{3 (FAU)} étant la quantité de Al₂O₃ apportée par la zéolithe FAU et Al₂O_{3 (C)} étant la quantité de Al₂O₃ apportée par la source additionnelle d'aluminium considéré sous sa forme oxyde, MPC6 étant le composé organique azoté 1,6-bis(méthylpiperidinium)hexane sous sa forme dihydroxyde.

Dans un mode de réalisation, le mélange réactionnel de l'étape i) contient :
- au moins une source additionnelle d'un oxyde SiO_{2 (c)}
- et au moins une source additionnelle d'un oxyde Al₂O_{3 (c)},
la zéolithe FAU représentant entre 65 et 85% massique par rapport à la quantité totale des sources de de SiO₂ et d'Al₂O₃ sous forme anhydre présentes dans ledit mélange, et le mélange réactionnel présentant la composition molaire suivante :
(SiO_{2(c)} + SiO_{2 (FAU)})/(Al₂O_{3 (FAU)} + Al₂O_{3(c)}) compris entre 6 et 100
H₂O/(SiO_{2(c)} + SiO_{2 (FAU)}) compris entre 5 et 60
MPC6/(SiO_{2(c)} + SiO_{2 (FAU)}) compris entre 0,05 et 0,50
Na₂O/(SiO_{2 (c)} + SiO_{2 (FAU)}) compris entre 0,05 et 0,25, bornes incluses.

Ladite source d'aluminium additionnelle peut être choisie parmi l'hydroxyde d'aluminium ou un sel d'aluminium, un aluminate de sodium, un alkoxyde d'aluminium, ou de l'alumine pris seuls ou en mélange, de préférence ladite source d'aluminium conventionnelle est l'hydroxyde d'aluminium.

La source de cations sodium peut être l'hydroxyde de sodium.

On peut ajouter des germes cristallins d'une zéolithe de type structural AFX au mélange réactionnel de l'étape i), en quantité comprise entre 0,01 et 10% poids par rapport à la masse totale des sources de SiO₂ et d'Al₂O₃ sous forme anhydre présentes dans ledit mélange, lesdits germes cristallins n'étant pas pris en compte dans la masse totale des sources de SiO₂ et d'Al₂O₃

L'étape i) peut comprendre une étape de mûrissement du mélange réactionnel à une température comprise entre 20 et 100°C, avec ou sans agitation, pendant une durée comprise entre 30 minutes et 48 heures.

La teneur en palladium introduite par l'étape de dépôt v) peut être comprise entre 0,5 à 5% massique, de préférence entre 0,8 et 3% massique, de manière plus préférée entre 0,9 et 2% massique, très avantageusement autour de 1% massique par rapport à la masse totale du catalyseur anhydre.

L'invention concerne également un catalyseur zéolithique AFX contenant du palladium obtenu par le procédé de préparation selon l'une quelconque de ses variantes.

Avantageusement, le rapport SiO₂/Al₂O₃ du catalyseur est compris entre 7 et 20, bornes incluses, de préférence entre 8 et 16, bornes incluses.

Avantageusement, la teneur en palladium dans ledit catalyseur est comprise entre 0,5 et 5% massique, de préférence entre 0,8 et 3% massique, de manière plus préférée entre 0,9 et 2% massique, très avantageusement autour de 1% massique par rapport à la masse totale du catalyseur final anhydre et la dispersion métallique du palladium mesurée par chimisorption du CO est comprise entre 40 et 100%, de préférence entre 50 et 100%.

L'invention concerne également l'utilisation du catalyseur selon l'une quelconque des variantes décrites ou obtenu par le procédé selon l'une quelconque des variantes décrites, pour la réduction sélective de NOₓ par un réducteur tel que NH₃ ou H₂.

Le catalyseur peut être mis en forme par dépôt sous forme de revêtement sur une structure nid d'abeilles ou une structure à plaques.

Ladite structure nid d'abeilles peut être formée de canaux parallèles ouverts aux deux extrémités ou comporter des parois poreuses filtrantes pour lesquelles les canaux parallèles adjacents sont alternativement bouchés de part et d'autre des canaux.

La quantité de catalyseur déposé sur ladite structure peut être comprise entre 50 à 240 g/L pour les structures filtrantes et entre 80 et 320 g/L pour les structures avec canaux ouverts.

Le catalyseur peut être associé à un liant tel que la cérine, l'oxyde de zirconium, l'alumine, la silice-alumine non zéolithique, l'oxyde de titane, un oxyde mixte de type cerine-zircone, un oxyde de tungstène et/ou une spinelle pour être mis en forme par dépôt sous forme de revêtement.

Ledit revêtement peut être associé à un autre revêtement présentant des capacités d'adsorption de polluants en particulier de NOx, de réduction de polluants en particulier des NOx ou favorisant l'oxydation de polluants.

Dans un autre mode de réalisation, ledit catalyseur peut être sous forme d'extrudé, contenant jusqu'à 100% dudit catalyseur.

La structure revêtue par ledit catalyseur ou obtenue par extrusion dudit catalyseur peut être intégrée dans une ligne d'échappement d'un moteur à combustion interne.

### LISTE DES FIGURES

D'autres caractéristiques et avantages du procédé de préparation du catalyseur selon l'invention, apparaîtront à la lecture de la description ci-après d'exemples non limitatifs de réalisations, en se référant aux figures annexées et décrites ci-après.
La Figure 1 représente les diagrammes de diffraction de rayons X (DRX) du catalyseur à base de zéolithe de type structural AFX et contenant du palladium, Pd/AFX1 obtenu selon l'exemple 2.
La Figure 2 représente les diagrammes de diffraction de rayons X (DRX) du catalyseur à base de zéolithe de type structural BEA et contenant du palladium, Pd/BEA obtenu selon l'exemple 3.
La Figure 3 représente les diagrammes de diffraction de rayons X (DRX) du catalyseur à base de zéolithe de type structural SSZ-13 et contenant du palladium, Pd/SSZ-13 obtenu selon l'exemple 4.
La Figure 4 représente les concentrations en NOx désorbées par les catalyseurs synthétisés suivant l'exemple 2 (Pd-AFX1), l'exemple 3 (Pd-BEA) et l'exemple 4 (Pd-SSZ-13). La courbe marquée par des ronds, celle marquée par des croix et celle marquée par des triangles correspondent respectivement aux tests réalisés avec les catalyseurs synthétisés suivant l'exemple 2 (Pd-AFX1), l'exemple 3 (Pd-BEA) et l'exemple 4 (Pd-SSZ-13).
La Figure 5 représente les concentrations en NOx désorbées par les catalyseurs vieillis pendant 4h à 750°C suivant l'exemple 6 et synthétisés suivant l'exemple 2 (Pd-AFX1 vieilli), l'exemple 3 (Pd-BEA vieilli) et l'exemple 4 (Pd-SSZ-13 vieilli). La courbe marquée par des ronds, celle marquée par des croix et celle marquée par des triangles correspondent respectivement aux tests réalisés avec les catalyseurs vieillis suivant l'exemple 6 et synthétisés suivant l'exemple 2 (Pd-AFX1 vieilli), l'exemple 3 (Pd-BEA vieilli) et l'exemple 4 (Pd-SSZ-13 vieilli).

### DESCRIPTION DES MODES DE REALISATION

Sauf précision contraire, dans l'ensemble de la description, les gammes de valeurs s'entendent bornes incluses.

L'invention concerne plus particulièrement un procédé de préparation d'un catalyseur à base de zéolithe de type structural AFX contenant du palladium comprenant au moins les étapes suivantes.

Etape i) : le mélange en milieu aqueux, d'une zéolithe de type structural FAU ayant un ratio molaire SiO_{2 (FAU)}/Al₂O_{3 (FAU)} compris entre 6 et 100, bornes incluses, d'un composé organique azoté MPC6, MPC6 étant le dihydroxyde de 1,6-bis(méthylpiperidinium)hexane d'au moins une source de cations sodium, le mélange réactionnel présentant la composition molaire suivante :
(SiO_{2(FAU)})/(Al₂O_{3 (FAU)}) compris entre 6 et 100
H₂O/(SiO_{2 (FAU)}) compris entre 5 et 60
MPC6/(SiO_{2(FAU)}) compris entre 0,05 et 0,50
Na₂O/(SiO_{2 (FAU)}) compris entre 0,05 et 0,25, bornes incluses,
dans laquelle SiO_{2 (FAU)} désigne la quantité de SiO₂ apportée par la zéolithe FAU, et Al₂O_{3 (FAU)} désigne la quantité de Al₂O₃ apportée par la zéolithe FAU, jusqu'à l'obtention d'un gel précurseur homogène;

De préférence, la source de cations sodium est l'hydroxyde de sodium.

Dans un mode de réalisation, le mélange réactionnel de l'étape i) peut comprendre au moins une source additionnelle d'un oxyde SiO₂, notée SiO_{2(c)} de sorte que le ratio molaire SiO_{2 (c)}/SiO_{2(FAU)} soit compris entre 0,001 et 0,01, bornes incluses, la teneur en SiO_{2 (FAU)} dans ledit ratio étant la teneur apportée par la zéolithe de type structural FAU.

Dans ce cas, le mélange réactionnel de l'étape i) peut avoir la composition molaire suivante :
(SiO_{2(c)} + SiO_{2 (FAU)})/Al₂O_{3 (FAU)} compris entre 6 et 100
H₂O/(SiO_{2 (c)} + SiO_{2 (FAU)}) compris entre 5 et 60
MPC6/(SiO_{2 (c)} + SiO_{2 (FAU)}) compris entre 0,05 et 0,50
Na₂O/(SiO_{2 (c)} + SiO_{2 (FAU)}) compris entre 0,05 et 0,25, bornes incluses.

Dans un autre mode de réalisation, le mélange réactionnel de l'étape i) peut comprendre au moins une source additionnelle d'un oxyde Al₂O₃, notée : Al₂O_{3 (C)} de sorte que le ratio molaire Al₂O₃₍c₎/Al₂O_{3 (FAU)} soit compris entre 0,001 et 8, bornes incluses, la teneur en Al₂O_{3 (FAU)} dans ledit ratio étant la teneur apportée par la zéolithe de type structural FAU.

Dans ce cas, le mélange réactionnel de l'étape i) peut avoir de préférence la composition molaire suivante :
SiO_{2 (FAU)}/(Al₂O_{3 (FAU)} + Al₂O_{3 (c)}) compris entre 6 et 100
H₂O/SiO_{2 (FAU)} compris entre 5 et 60
MPC6/SiO_{2(FAU)} compris entre 0,05 et 0,5
Na₂O/SiO_{2 (FAU)} compris entre 0,05 et 0,25, bornes incluses,
SiO_{2 (FAU)} étant la quantité de SiO₂ apportée par la zéolithe FAU, et Al₂O_{3 (FAU)} étant la quantité de Al₂O₃ apportée par la zéolithe FAU, MPC6 étant le composé organique azoté 1,6-bis(méthylpiperidinium)hexane sous sa forme dihydroxyde.

Dans un autre mode de réalisation, le mélange réactionnel de l'étape i) peut contenir :
- au moins une source additionnelle d'un oxyde SiO_{2 (c)}
- et au moins une source additionnelle d'un oxyde Al₂O_{3(c)},
la zéolithe FAU représentant entre 65 et 85% massique par rapport à la quantité totale des sources de SiO₂ et d'Al₂O₃ sous forme anhydre présentes dans ledit mélange - c'est-à-dire d'éléments trivalents et tétravalents sous forme oxyde SiO_{2 (FAU)}, SiO_{2(c)}, Al₂O_{3 (FAU)} et Al₂O_{3(c)} du mélange réactionnel -, et le mélange réactionnel présentant la composition molaire suivante :
(SiO_{2(c)} + SiO_{2 (FAU)})/(Al₂O_{3 (FAU)} + Al₂O_{3(c)}) compris entre 6 et 100
H₂O/(SiO_{2(c)} + SiO_{2 (FAU)}) compris entre 5 et 60
MPC6/(SiO_{2(c)} + SiO_{2 (FAU)}) compris entre 0,05 et 0,50
Na₂O/(SiO_{2 (c)} + SiO_{2 (FAU)}) compris entre 0,05 et 0,25, bornes incluses.

On peut ajouter des germes cristallins d'une zéolithe de type structural AFX au mélange réactionnel de l'étape i) en quantité comprise entre 0,01 et 10% poids par rapport à la masse totale des sources de SiO₂ et d'Al₂O₃ sous forme anhydre présentes dans ledit mélange, lesdits germes cristallins n'étant pas pris en compte dans la masse totale des sources de SiO₂ et d'Al₂O₃

L'étape i) peut comprendre une étape de mûrissement du mélange réactionnel à une température comprise entre 20 et 100°C, avec ou sans agitation, pendant une durée comprise entre 30 minutes et 48 heures.

Etape ii) : le traitement hydrothermal dudit gel précurseur obtenu à l'issue de l'étape i) est réalisé à une température comprise entre 120°C et 220°C, pendant une durée comprise entre 12 heures et 15 jours, de préférence entre 12 heures et 8 jours.

Le traitement hydrothermal de l'étape ii) peut être réalisé sous pression autogène.

Avantageusement le rapport molaire SiO₂/Al₂O₃ de la zéolithe AFX obtenue est compris entre 7 et 20, bornes incluses, et de préférence entre 8 et 16, bornes incluses.

Etape iii) de filtration, lavage, séchage, et calcination.

Dans cette étape, la zéolithe de type structural AFX obtenue à l'issue de l'étape ii) est filtrée, lavée, et séchée à une température comprise entre 60 et 120°C, pendant une durée comprise entre 5 et 24 heures pour obtenir une zéolithe de type structural AFX séchée. La zéolithe séchée est ensuite calcinée à une température comprise entre 500 et 700°C pendant une durée comprise entre 2 et 20 heures, la calcination pouvant être précédée d'une montée en température progressive.

Etape iv) d'échange ionique : au moins un échange ionique est mis en oeuvre sur la zéolithe de type structural AFX calcinée obtenue à l'étape iii) et comprend la mise en contact de la zéolithe de type structural AFX obtenue à l'étape iii), avec une solution contenant des cations ammonium, de préférence du nitrate d'ammonium, sous agitation à des températures comprises entre 20 et 95°C de préférence entre 60 et 85°C pendant une durée comprise entre 1 heure et 2 jours pour obtenir une zéolithe AFX calcinée sous forme ammonium. A la fin de l'étape d'échange ionique la zéolithe de type structural AFX sous forme ammonium est séchée de nouveau à une température comprise entre 60 et 120°C, de préférence pendant une durée comprise entre 5 et 24 heures. Cette étape d'échange ionique peut être répétée plusieurs fois dans le but d'obtenir un solide contenant moins de 0,01% Na massique.

Etape v) de dépôt du palladium : le dépôt de la solution de palladium, sur ladite zéolithe AFX calcinée sous forme ammonium et séchée, peut être réalisé selon toutes les techniques connues de l'homme du métier.

De préférence, la solution de palladium est déposée par méthode d'imprégnation à sec ou par voie colloïdale.

La teneur en palladium introduite par l'étape de dépôt v) est avantageusement comprise entre 0,5 à 5% massique, de préférence entre 0,8 et 3% massique, de manière plus préférée entre 0,9 et 2% massique, très avantageusement autour de 1% massique par rapport à la masse totale du catalyseur anhydre.

### Imprégnation à sec

Dans un mode de réalisation selon l'invention, la solution de palladium est déposée par méthode d'imprégnation à sec. Plus particulièrement, le procédé de préparation du catalyseur comprend les étapes suivantes:
a) on prépare une solution aqueuse comprenant au moins un sel précurseur du palladium ;
b) on imprègne la zéolithe AFX sous forme ammonium et séchée obtenue à l'étape iv) du procédé de préparation selon l'invention avec la solution aqueuse obtenue à l'étape a) à temparture ambiante de préférence
c) on sèche le précurseur de catalyseur obtenu à l'issue de l'étape b) pour obtenir un précurseur de catalyseur séché ;

Le précurseur du catalyseur est généralement séché afin d'éliminer toute ou une partie de l'eau introduite lors de l'imprégnation, de préférence à une température comprise entre 50°C et 250°C, de manière plus préférée entre 70°C et 200°C. La durée du séchage est de préférence comprise entre 0,5 et 20 heures. Des durées plus longues ne sont pas exclues, mais n'apportent pas nécessairement d'amélioration.

Le séchage est généralement effectué sous air de combustion d'un hydrocarbure, de préférence du méthane, ou sous air chauffé comprenant entre 0 et 80 g d'eau par kg d'air de combustion, un taux d'oxygène compris entre 5% et 25% volume et un taux de dioxyde de carbone compris entre 0% et 10% volume.

d) optionnellement, on calcine le précurseur de catalyseur séché obtenu à l'étape d) à une température comprise entre 250 et 900°C pour obtenir un précurseur de catalyseur calciné ; Après séchage, le catalyseur peut être calciné sous air, de préférence de combustion, et plus préférentiellement un air de combustion du méthane, comprenant entre 40 et 80 g d'eau par kg d'air, un taux d'oxygène compris entre 5% et 15% volume et un taux de CO₂ compris entre 4% et 10% volume. La température de calcination est généralement comprise entre 250°C et 900°C, de préférence comprise entre environ 350°C et environ 550°C. La durée de calcination est généralement comprise entre 0,5 et 5 heures.

e) optionnellement, on réalise un traitement réducteur par mise en contact avec un gaz réducteur.

### Imprégnation par voie colloïdale

Dans un autre mode de réalisation selon l'invention, la solution de palladium est déposée par méthode colloïdale. Plus particulièrement, le procédé de préparation du catalyseur comprend les étapes suivantes :
a) préparation d'une solution aqueuse comprenant au moins un sel précurseur du palladium Lors de l'étape a), on prépare une solution aqueuse comprenant au moins un sel précurseur du palladium. Le sel précurseur du palladium est de préférence sélectionné parmi le chloropalladate de sodium et le nitrate de palladium.
b) préparation d'un support imprégné
   Le dépôt du palladium sur la zéolithe AFX calcinée sous forme ammonium et séchée obtenue à l'étape iv) du procédé de préparation selon l'invention, est réalisé par imprégnation à sec de la solution aqueuse obtenue à l'étape a) sur la zéolithe AFX calcinée sous forme ammonium et séchée, le volume de ladite solution aqueuse étant généralement compris entre 0,9 et 1,1 fois le volume poreux de ladite zéolithe AFX calcinée sous forme ammonium et séchée.
c) maturation du support imprégné lors de l'étape b)
   Après imprégnation, la zéolithe AFX est maturée à l'état humide pendant 0,5 à 40 heures, de manière préférée pendant 1 à 30 heures. Des durées plus longues ne sont pas exclues, mais n'apportent pas nécessairement d'amélioration.
d) séchage du précurseur de catalyseur obtenu à l'étape b) ou c)

Le précurseur du catalyseur est généralement séché afin d'éliminer toute ou une partie de l'eau introduite lors de l'imprégnation, de préférence à une température comprise entre 50°C et 250°C, de manière plus préférée entre 70°C et 200°C. La durée du séchage est de préférence comprise entre 0,5 et 20 heures. Des durées plus longues ne sont pas exclues, mais n'apportent pas nécessairement d'amélioration.

Le séchage est généralement effectué sous air de combustion d'un hydrocarbure, de préférence du méthane, ou sous air chauffé comprenant entre 0 et 80 g d'eau par kg d'air de combustion, un taux d'oxygène compris entre 5% et 25% volume et un taux de dioxyde de carbone compris entre 0% et 10% volume.

e) calcination sous air de combustion du catalyseur séché obtenu à l'étape d) (étape optionnelle)

Après séchage, le catalyseur peut être calciné sous air, de préférence de combustion, et plus préférentiellement un air de combustion du méthane, comprenant entre 40 et 80 g d'eau par kg d'air, un taux d'oxygène compris entre 5% et 15% volume et un taux de CO₂ compris entre 4% et 10% volume. La température de calcination est généralement comprise entre 250°C et 900°C, de préférence comprise entre environ 350°C et environ 550°C. La durée de calcination est généralement comprise entre 0,5 et 5 heures.

La présente invention concerne également un catalyseur sous forme d'une zéolithe AFX contenant du palladium obtenu par le procédé selon l'une quelconque des variantes de réalisation de l'invention.

La teneur en palladium du catalyseur zéolithique selon l'invention est avantageusement comprise entre 0,5 et 5% poids par rapport à la masse totale de catalyseur anhydre, de préférence entre 0,8 et 3% poids, de manière très préférée entre 0,9 % et 2% poids, très avantageusement autour de 1% poids.

Dans le catalyseur zéolithique selon l'invention, la dispersion du palladium mesurée par chimisorption du CO est avantageusement comprise entre 40 et 100%, de préférence entre 50 et 100%.

### Caractérisations du catalyseur selon invention

A l'issue de ladite étape de préparation ii) de la zéolithe AFX, la diffraction des rayons X permet de vérifier que le solide obtenu par le procédé selon l'invention est bien une zéolithe de type structural AFX. La pureté obtenue est avantageusement supérieure à 90%, de préférence supérieure à 95%, de manière très préférée supérieure à 99,8% en poids. Plus généralement, à l'issue des étapes de préparation ii), iii), iv), ou v) du catalyseur selon l'invention, la diffraction des rayons X permet de vérifier que le solide obtenu par le procédé selon l'invention est bien un catalyseur à base de zéolithe AFX.

En d'autres termes, le catalyseur selon l'invention à base de zéolithe AFX et contenant du palladium comprend moins de 5% massique, préférentiellement moins de 1% massique et de manière encore plus préférée moins de 0,2% massique d'impuretés et/ou de phase cristalline ou amorphe autre que AFX (les bornes n'étant pas incluses). De manière très avantageuse, le procédé de l'invention conduit à la formation d'un catalyseur à base de zéolithe AFX, exempt de toute autre phase cristalline ou amorphe.

Avantageusement, le catalyseur obtenu par le procédé selon l'invention présente le diagramme de diffraction de rayons X incluant au moins les raies inscrites dans le Tableau 1.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé obtenu à l'issue de l'étape ii) du procédé selon l'invention comporte au moins les raies aux valeurs de dₕₖₗ données dans le Tableau 1 (Valeurs moyennes des dₕₖₗ et intensités relatives mesurées sur un diagramme de diffraction de rayons X du catalyseur composite zéolithique selon l'invention). Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,6Å et ± 0,01Å.

Tableau 1 : Valeurs moyennes des dₕₖₗ et intensités relatives mesurées sur un diagramme de diffraction de rayons X du solide cristallisé de type structural AFX calciné

**Table 1**

| 2 thêta (°) | dhkl (Å) | Irel | 2 thêta (°) | dhkl (Å) | Irel |
|---|---|---|---|---|---|
| 7,51 | 11,77 | f | 26,09 | 3,41 | mf |
| 8,75 | 10,10 | m | 27,19 | 3,28 | ff |
| 11,72 | 7,54 | FF | 27,56 | 3,23 | ff |
| 12,98 | 6,81 | m | 28,23 | 3,15 | m |
| 14,99 | 5,90 | ff | 28,68 | 3,11 | ff |
| 15,65 | 5,66 | f | 30,23 | 2,95 | mf |
| 17,51 | 5,06 | f | 30,56 | 2,92 | m |
| 18,04 | 4,91 | m | 31,17 | 2,87 | ff |
| 19,56 | 4,53 | ff | 31,58 | 2,83 | mf |
| 19,86 | 4,47 | f | 31,91 | 2,80 | ff |
| 20,38 | 4,35 | F | 32,73 | 2,73 | ff |
| 21,84 | 4,07 | FF | 33,86 | 2,65 | mf |
| 22,28 | 3,99 | ff | 34,25 | 2,62 | ff |
| 22,55 | 3,94 | ff | 34,74 | 2,58 | f |
| 23,83 | 3,73 | f | 35,33 | 2,54 | ff |

où FF = très fort ; F = fort ; m = moyen ; mf = moyen faible ; f = faible ; ff = très faible. L'intensité relative Iᵣₑₗ est donnée en rapport à une échelle d'intensité relative où il est attribué une valeur de 100 à la raie la plus intense du diagramme de diffraction des rayons X : ff <15 ; 15 ≤f <30 ; 30 ≤ mf <50 ; 50 ≤m < 65 ; 65 ≤F < 85 ; FF ≥ 85.

La spectrométrie de fluorescence des rayons X (FX) est une technique d'analyse chimique utilisant une propriété physique de la matière, la fluorescence de rayons X. Elle permet l'analyse de la majorité des éléments chimiques à partir du Béryllium (Be) dans des gammes de concentration allant de quelques ppm à 100%, avec des résultats précis et reproductibles. On utilise les rayons X pour exciter les atomes qui sont dans l'échantillon, ce qui leur fait émettre des rayons X à énergie caractéristique de chaque élément présent. L'intensité et l'énergie de ces rayons X sont ensuite mesurées pour déterminer la concentration des éléments dans le matériau.

La perte au feu (PAF) du catalyseur obtenu après l'étape de séchage (et avant calcination) ou après l'étape de calcination de l'étape iii) du procédé selon l'invention est généralement comprise entre 2 et 20% poids. La perte au feu de l'échantillon de catalyseur, désignée sous l'acronyme PAF, correspond à la différence de masse de l'échantillon avant et après un traitement thermique à 1000°C pendant 2 heures. Elle est exprimée en % correspondant au pourcentage de perte de masse. La perte au feu correspond en général à la perte de solvant (comme l'eau) contenu dans le solide mais aussi à l'élimination de composés organiques contenus dans les constituants solides minéraux.

La dispersion de particules (D) est un nombre sans unité, souvent exprimé en %. La dispersion est d'autant plus grande que les particules sont petites. Elle est définie dans la publication de R. Van Hardeveld et F. Hartog, «The statistics of surface atoms and surface sites on metal crystals», Surface Science 15, 1969, 189-230. La dispersion peut être mesurée par chimisorption du CO.

### Catalyseur selon l'invention

La demanderesse a découvert que le matériau obtenu par le procédé selon l'invention présente des caractéristiques différentes des matériaux aluminosilicates à petits pores comprenant du palladium connus jusqu'à présent. En particulier, le catalyseur zéolithique contenant du palladium obtenu par l'une quelconque des variantes du procédé selon l'invention présente une capacité d'adsorption et une température de désorption augmentées ainsi qu'une tenue hydrothermale supérieure. Sans être lié par une quelconque théorie, il semblerait que le procédé de préparation du catalyseur selon l'invention permet notamment une meilleure dispersion du palladium, qui permet de contribuer aux performances catalytiques améliorées en réduction des Nox. Par ailleurs, la meilleure dispersion du palladium permet d'optimiser la quantité de palladium accessible et active, et d'utiliser des teneurs plus faibles en palladium tout en obtenant de très bonnes performances catalytiques.

Avantageusement, le rapport molaire SiO₂/Al₂O₃ du catalyseur à base de zéolithe AFX obtenu est compris entre 7 et 20, de préférence entre 8 et 16, bornes incluses.

La teneur en palladium du catalyseur zéolithique selon l'invention est avantageusement comprise entre 0,5 et 5% poids par rapport à la masse totale de catalyseur anhydre, de préférence entre 0,8 et 3% poids, de manière très préférée entre 0,9 % et 2% poids, très avantageusement autour de 1% poids.

Dans le catalyseur zéolithique préparé selon l'invention, la dispersion du palladium est avantageusement comprise entre 40 et 100%, de préférence entre 50 et 100%.

### Utilisation du catalyseur selon l'invention

L'invention concerne également l'utilisation du catalyseur selon l'invention, directement préparé ou susceptible d'être préparé par le procédé décrit précédemment selon l'une quelconque de ses variantes, pour l'adsorption de NOx à températures inférieures à 200°C, avantageusement mis en forme par dépôt sous forme de revêtement (« washcoat » selon la terminologie anglo-saxonne) sur une structure nid d'abeilles principalement pour les applications mobiles.

La structure nid d'abeilles est formée de canaux parallèles ouverts aux deux extrémités (flow-through en anglais) ou comporte des parois poreuses filtrantes et dans ce cas les canaux parallèles adjacents sont alternativement bouchés de part et d'autre des canaux afin de forcer le flux de gaz à traverser la paroi (wall-flow monolith en anglais). Ladite structure nid d'abeilles ainsi revêtue constitue un pain catalytique. Ladite structure peut être composée de cordiérite, carbure de silicium (SiC), titanate d'aluminium (AlTi), alumine alpha, mullite ou tout autre matériau dont la porosité est comprise entre 30 et 70%. Ladite structure peut être réalisée en tôle métallique, en acier inoxydable contenant du Chrome et de l'Aluminium, acier de type FeCrAl.

La quantité de catalyseur selon l'invention déposé sur ladite structure est comprise entre 50 à 240 g/L pour les structures filtrantes et entre 50 et 320 g/L pour les structures avec canaux ouverts.

Le revêtement proprement dit (« washcoat ») comprend le catalyseur selon l'invention, avantageusement associé à un liant tel que la cérine, l'oxyde de zirconium, l'alumine, la silice-alumine non zéolithique, l'oxyde de titane, un oxyde mixte de type cérine-zircone, un oxyde de tungstène, une spinelle. Ledit revêtement est avantageusement appliqué à ladite structure par une méthode de dépôt (washcoating en anglais) qui consiste à tremper le monolithe dans une suspension (slurry en anglais) de poudre de catalyseur selon l'invention dans un solvant, de préférence de l'eau, et potentiellement des liants, oxydes métalliques, stabilisateurs ou autres promoteurs. Cette étape de trempe peut être répétée jusqu'à atteindre la quantité souhaitée de revêtement. Dans certains cas, le slurry peut aussi être pulvérisé au sein du monolithe. Le revêtement une fois déposé, le monolithe est calciné à une température de 300 à 600°C pendant 1 à 10 heures.

Ladite structure peut être revêtue d'un ou plusieurs revêtements. Le revêtement comprenant le catalyseur selon l'invention est avantageusement associé à, c'est-à-dire recouvre ou est recouvert par, un autre revêtement présentant des capacités de réduction de polluants en particulier des NOx ou/et favorisant l'oxydation de polluants, en particulier le monoxyde de carbone (CO) et les hydrocarbures (HC).

Une autre possibilité est de mettre le catalyseur sous forme d'extrudé. Dans ce cas, la structure obtenue peut contenir jusqu'à 100% de catalyseur selon l'invention.

Ladite structure revêtue par le catalyseur selon l'invention est avantageusement intégrée dans une ligne d'échappement d'un moteur à combustion interne. Dans ces conditions de fonctionnement du moteur, les gaz d'échappement contiennent notamment les polluants suivants : des suies, des hydrocarbures imbrûlés (HC), du monoxyde de carbone (CO), des oxydes d'azotes (NOx). Ladite structure revêtue du catalyseur selon l'invention est placée en amont d'un catalyseur de traitement des NOx qui peut être un catalyseur NH₃-SCR, un NOxTrap ou un catalyseur trois voies. Un catalyseur d'oxydation dont la fonction est d'oxyder les HC et le CO ainsi qu'un filtre pour éliminer les suies des gaz d'échappement peuvent être placés de manière indifférente en amont ou en aval de Ladite structure.

La fonction de ladite structure revêtue étant d'adsorber les NOx, sa gamme de fonctionnement se situant :
entre -20C° et 300°C pour la phase d'adsorption, et de manière préférée entre -20°C et 200°C et
entre 150°C et 500°C pour la phase de désorption et de manière préférée entre 250°C et 400°C.

### AVANTAGES DE L'INVENTION

Le catalyseur selon l'invention, à base d'une zéolithe de type structural AFX contenant du palladium, présente des propriétés améliorées par rapport aux catalyseurs de l'art antérieur. En particulier, l'utilisation du catalyseur selon l'invention permet d'adsorber des quantités de NOx entre -20°C et 200°C.

Il présente aussi une meilleure tenue en vieillissement hydrothermal, garantissant des performances d'adsorption élevées même après ce vieillissement.

### EXEMPLES

L'invention est illustrée par les exemples suivants qui ne présentent, en aucun cas, un caractère limitatif.

### Exemple 1: préparation du dihydroxyde de 1,6-bis(méthylpiperidinium)hexane (structurant organique MPC6).

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 heures. Le mélange est ensuite refroidi à température ambiante, puis filtré. Le mélange est versé dans 300 mL de diéthyléther froid, puis le précipité formé est filtré et lavé avec 100 mL de diéthyléther. Le solide obtenu est recristallisé dans un mélange éthanol/éther. Le solide obtenu est séché sous vide pendant 12 heures. On obtient 71 g d'un solide blanc (soit un rendement de 80%).

Le produit possède le spectre RMN ¹H attendu. RMN ¹H (D₂O, ppm/TMS) : 1,27(4H,m) ; 1,48 (4H,m) ; 1,61 (4H,m) ; 1,70 (8H,m) ; 2,85 (6H,s) ; 3,16 (12H,m).

18,9 g d'Ag₂O (0,08 mole, 99%, Aldrich) sont ajoutés dans un bécher en téflon de 250 mL contenant 30 g du structurant dibromure de 1,6-bis(méthylpiperidinium)hexane (0,07 mol) préparé et 100 mL d'eau déionisée. Le milieu réactionnel est agité à l'abri de la lumière pendant 12 heures. Le mélange est ensuite filtré. Le filtrat obtenu est composé d'une solution aqueuse de dihydroxyde de 1,6-bis(méthylpiperidinium)hexane (MPC6). Le dosage de cette espèce est réalisé par RMN du proton en utilisant l'acide formique en tant qu'étalon.

### Exemple 2: préparation d'un catalyseur contenant une zéolithe de type structural AFX et du palladium selon l'invention Pd-AFX1

275,8 g d'une solution aqueuse de dihydroxyde de 1,6-bis(méthylpiperidinium)hexane (18,36% en poids, MPC6) préparé selon l'exemple 1 sont mélangés avec 391,23 g d'eau permutée, sous agitation et à température ambiante. 7,18 g d'hydroxyde de sodium (98% en poids, Aldrich) sont dissous dans le mélange précédent sous agitation et à température ambiante. Par la suite, 6,33 g de gel amorphe d'hydroxyde d'aluminium (Al(OH)₃, 58,55% en masse de Al₂O₃, Merck) sont incorporés dans le mélange de synthèse, celui-ci est maintenu sous agitation pendant une demi-heure à température ambiante. Ensuite sont versés 70,88 g d'une zéolithe de type structural FAU (CBV780, SiO₂/Al₂O₃ = 90,54, Zeolyst, PAF = 8,52%) et on maintient sous agitation la suspension obtenue pendant 30 minutes à température ambiante. Afin de favoriser la formation d'une zéolithe de type structural AFX, 6,14 g de germes (8,7% par rapport à la masse de zéolithe CBV780) d'une zéolithe de type structural AFX calcinée sont ajoutés dans le mélange de synthèse qui est maintenu sous agitation pendant 5 minutes. Ensuite, le mélange réactionnel subit une étape de mûrissement pendant 24 heures à température ambiante sous agitation (200 tr/min). La composition molaire du gel précurseur est la suivante : 1 SiO₂: 0,05 Al₂O₃: 0,167 MPC6: 0,093 Na₂O: 36,73 H₂O, soit un ratio SiO₂/Al₂O₃ de 20. Le gel précurseur est ensuite transféré, après homogénéisation, dans un réacteur en inox de 1000 mL doté d'un système d'agitation à quatre pales inclinées. Le réacteur est fermé, puis chauffé pendant 14 heures à 180°C avec une montée en température de 5°C/min jusqu'à 180°C sous agitation à 200 tr/min pour permettre la cristallisation de la zéolithe de type structural AFX. Le produit cristallisé obtenu est filtré, lavé à l'eau déionisée, puis séché une nuit à 100°C. La perte au feu du solide séché est de 15%. Le solide est ensuite introduit dans un four à moufle où est réalisée une étape de calcination : le cycle de calcination comprend une montée en température de 1,5°C/min jusqu'à 200°C, un palier à 200°C maintenu durant 2 heures, une montée de 1°C/min jusqu'à 550°C suivi d'un palier à 550°C maintenu durant 12 heures puis un retour à la température ambiante. Le matériau obtenu est nommé AFX1.

40,0 g de zéolithe AFX1 ont été échangés 3 fois avec une solution aqueuse 3M de NH₄NO₃ à 80°C pendant 1 heure sous agitation (300 tr/min) et un rapport volume de solution sur masse de zéolithe égal à 10 (V/P). Ensuite, le solide a été séché pendant une nuit à 100°C. Le matériau obtenu est nommé NH₄-AFX1.

0,25 g Pd(NH₃)₄Cl₂ hydratée est dilué dans 8,2 mL d'eau minéralisée puis imprégnée à 25°C (par la méthode d'imprégnation à sec) sur 10 g de la zéolithe NH₄-AFX1 préparée ci-dessus. Le solide obtenu est séché sous air pendant 2 h à 120°C. Le catalyseur Pd-AFX1 obtenu est séché sous air à 120°C, puis est calciné pendant 2 heures à 550°C sous un flux d'air de combustion avec une VVH de 3000 litres d'air de combustion par litre de catalyseur et par heure. L'air de combustion contient environ 60 g d'eau par kg d'air sec.

Le catalyseur Pd-AFX1 ainsi préparé comprend 1% en poids de palladium par rapport au poids total de catalyseur. La dispersion métallique du Pd obtenue par chimisorption CO est de 55%.

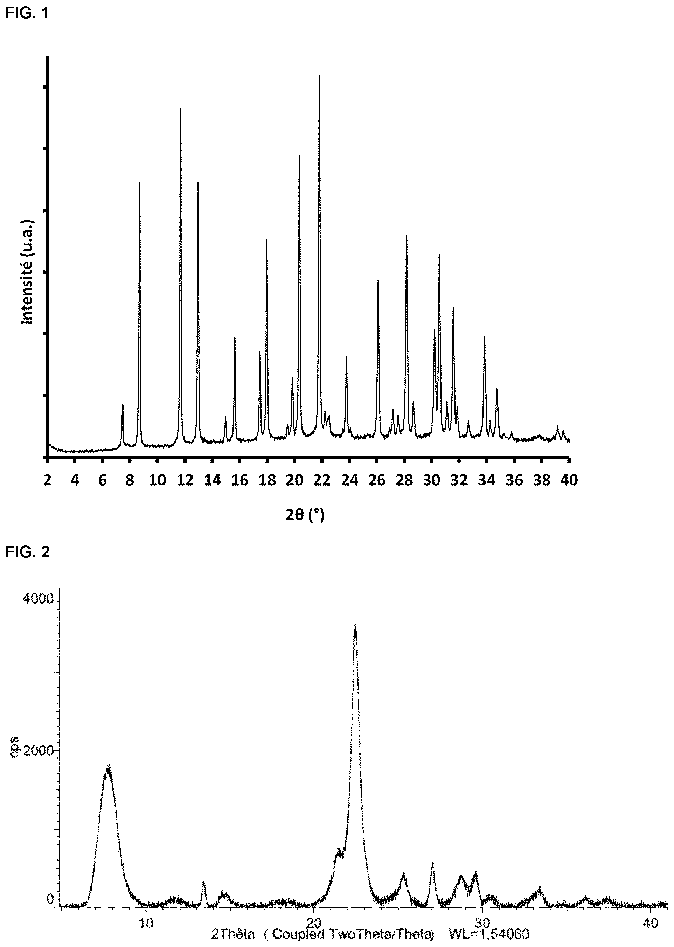

Le catalyseur Pd-AFX1 a été analysé par diffraction de rayons X et identifié comme étant constitué majoritairement d'une zéolithe de type structural AFX avec une pureté supérieure à 99% poids. Le diagramme de diffraction de rayons X effectué sur le catalyseur Pd-AFX1 est donné sur la **Figure** 1. Le produit a un rapport molaire SiO₂/Al₂O₃ de 14,5 tel que déterminé par FX.

### Exemple 3 (Comparatif) : préparation d'un catalyseur contenant une zéolithe de type structural BEA avec du Pd, Pd-BEA

Une zéolithe commerciale NH₄-BEA (CP814E, SiO₂/Al₂O₃ = 25,16, Zeolyst), a été utilisée comme support pour l'imprégnation du précurseur de palladium.

0,25 g Pd(NH₃)₄Cl₂ hydratée est dilué dans 17 mL d'eau minéralisée puis imprégnée à 25°C (par la méthode d'imprégnation à sec) sur 10 g de la zéolithe NH₄-BEA.

Le solide obtenu est séché sous air pendant 2 h à 120°C. Le catalyseur Pd-BEA obtenu est séché sous air à 120°C, puis est calciné pendant 2 heures à 550°C sous un flux d'air de combustion avec une VVH de 3000 litres d'air de combustion par litre de catalyseur et par heure. L'air de combustion contient environ 60 g d'eau par kg d'air sec.

Le catalyseur Pd-BEA ainsi préparé comprend 1% en poids de palladium par rapport au poids total de catalyseur. La dispersion métallique du Pd obtenue par chimisorption CO est de 28%.

Le catalyseur Pd-BEA a été analysé par diffraction de rayons X et identifié comme étant constitué d'une zéolithe de type structural BEA avec une pureté supérieure à 99% poids. Le diagramme de diffraction de rayons X effectué sur le catalyseur Pd-BEA est donné sur la **Figure 2****.** Le catalyseur Pd-BEA a un rapport molaire SiO₂/Al₂O₃ de 25,16 tel que déterminé par FX.

### Exemple 4 (Comparatif) : préparation d'une zéolithe Pd-SSZ-13 (type structural CHA)

27,21 g d'une solution aqueuse d'hydroxyde de N,N,N-trimethyl-1-adamantammonium (TMAdA, 20,11% en poids, SACHEM) ont été mélangés avec 24,43 g d'eau déionisée. 1,35 g d'hydroxyde de sodium (solide, pureté 98% en poids, Aldrich) sont ajoutés au mélange précédent, la préparation obtenue est maintenue sous agitation pendant 10 minutes. Par la suite, 1,09 g de pseudo boehmite (Pural SB3, 74,20% Al₂O₃, Condea) sont incorporés et le gel de synthèse est maintenu sous agitation pendant 15 minutes. Au final, 25,93 g de silice colloïdale (Ludox AS40, 40% SiO₂ en poids, Aldrich) ont été incorporés dans le mélange de synthèse qui est maintenu pendant une demi-heure à température ambiante sous agitation (350 tr/min). La composition molaire du gel précurseur est la suivante: 60 SiO₂: 2,75 Al₂O₃: 9,0 TMAda: 6,0 Na₂O: 1201,0 H₂O, soit un ratio SiO₂/Al₂O₃ de 21,8. Le gel précurseur est ensuite transféré, après homogénéisation, dans un réacteur en inox de 160 mL doté d'un système d'agitation à quatre pales inclinées. Le réacteur est fermé, puis chauffé pendant 120 heures avec une montée en température de 3°C/min jusqu'à 160°C sous agitation à 200 tr/min pour permettre la cristallisation de la zéolithe de type structural CHA. Le produit cristallisé obtenu est filtré, lavé à l'eau déionisée, puis séché une nuit à 100°C. Le solide est ensuite introduit dans un four à moufle où est réalisée une étape de calcination. Le cycle de calcination comprend une montée en température de 1,5°C/min jusqu'à 200°C, un palier à 200°C maintenu durant 2 heures, une montée de 1°C/min jusqu'à 550°C suivi d'un palier à 550°C maintenu durant 8 heures puis un retour à la température ambiante. Le matériau obtenu est nommé SSZ-13.

5,0 g du matériau SSZ-13 ont été échangés 3 fois avec une solution aqueuse 3M de NH₄NO₃ à 80°C pendant 1 heure sous agitation (300 tr/min) et un rapport volume de solution sur masse de zéolithe égal à 10 (V/P). Ensuite, le solide a été séché pendant nuit à 100°C. Le matériau obtenu est nommé NH₄-SSZ-13.

### Imprégnation du Pd

0,25 g Pd(NH₃)₄Cl₂ hydratée est dilué dans 10 mL d'eau minéralisée puis imprégnée à 25°C (par la méthode d'imprégnation à sec) sur 10 g de la zéolithe NH₄-SSZ-13 préparée ci-dessus.

Le solide obtenu est séché sous air pendant 2 h à 120°C, puis est calciné pendant 2 heures à 550°C sous un flux d'air de combustion avec une VVH de 3000 litres d'air de combustion par litre de catalyseur et par heure. L'air de combustion contient environ 60 g d'eau par kg d'air sec.

Le catalyseur Pd-SSZ-13 ainsi préparé comprend 1% en poids de palladium par rapport au poids total de catalyseur. La dispersion métallique du Pd obtenue par chimisorption CO est de 47 %.

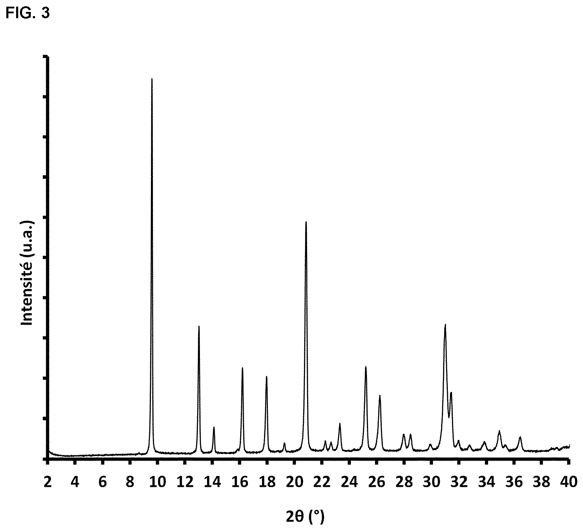

Le catalyseur Pd-SSZ-13 a été analysé par diffraction de rayons X et identifié comme étant constitué majoritairement d'une zéolithe de type structural CHA avec une pureté supérieure à 99% poids. Le diagramme de diffraction de rayons X effectué sur le catalyseur Pd-SSZ-13 est donné sur la **Figure 3****.**

### Exemple 6 : Etape de vieillissement hydrothermal

550mg de chacun des échantillons synthétisés selon l'exemple 2 (Pd-AFX1), l'exemple 3 (Pd-BEA) et l'exemple 4 (Pd-SSZ-13) sont placés sous forme de poudre dans un réacteur en quartz. Ils sont traversés par un débit de 150 L/h d'un mélange de composition molaire suivante : 10% H₂O, 20% O₂ et N₂ en complément.

Les échantillons sont soumis à ces conditions pendant 4h à une température de 750°C. Ils sont ensuite refroidis à température ambiante sous flux de N₂.

### Exemple 7 :

L'échantillon synthétisé selon l'exemple 2 et vieilli sous les conditions de l'exemple 6 est nommé Pd-AFX1 vieilli.

L'échantillon synthétisé selon l'exemple 3 et vieilli sous les conditions de l'exemple 6 est nommé Pd-BEA vieilli.

L'échantillon synthétisé selon l'exemple 4 et vieilli sous les conditions de l'exemple 6 est nommé Pd-SSZ-13 vieilli.

### Exemple 8 : tests d'adsorption et désorption de NOx

Pour mettre en évidence les capacités d'adsorption des matériaux synthétisés, un test d'adsorption de NO à 120°C suivi d'une rampe de température de 120°C à 600°C à 10°C/min est réalisé avec l'exemple 2 (Pd-AFX1, selon l'invention), l'exemple 3 (Pd-BEA) et l'exemple 4 (Pd-SSZ-13). Pour le test de chaque échantillon, 523 mg de catalyseur sous forme de poudre sont disposés dans un réacteur en quartz.
- Un préconditionnement est réalisé, il consiste en une montée en température depuis l'ambiant (20°C) jusqu'à 550°C avec une rampe de 10°C/min sous un mélange composé de 10% O₂, 5% CO₂, 10% H₂O et N₂ en complément. La descente en température se fait sous même mélange jusqu'à 120°C.

L'adsorption est réalisée à 120°C sous mélange suivant : 200 ppm NO + 300 ppm CO + 5% CO₂+ 10% H₂O et N₂ en complément. La durée de cette phase d'adsorption est de 10 min. Pour désorber les NOx adsorbés, l'échantillon subit une montée en température jusqu'à 550°C suivant une rampe de 10°C/min sous mélange 10% CO₂ + 10% H₂O et N₂ en complément

Un analyseur FTIR permet de mesurer la concentration des espèces NO, NO₂, NH₃, N₂O, CO, CO₂, H₂O, O₂ en sortie de réacteur.

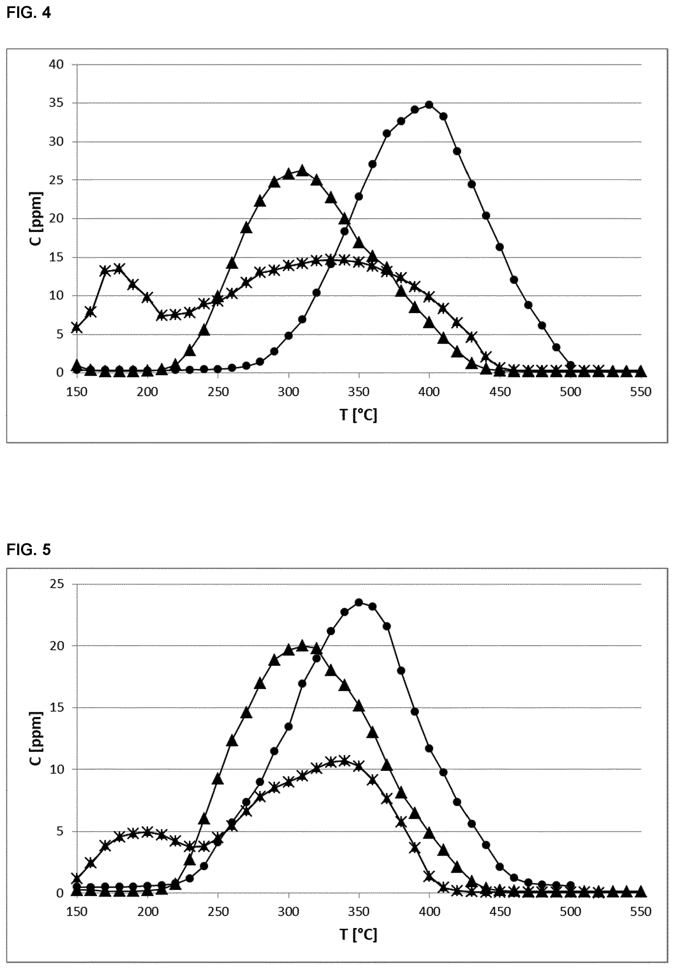

La figure 4 présente les concentrations en NOx désorbées pendant la rampe de température. La courbe marquée par des ronds, celle marquée par des croix et celle marquée par des triangles correspondent respectivement aux tests réalisés avec les catalyseurs synthétisés suivant l'exemple 2 (Pd-AFX1), l'exemple 3 (Pd-BEA) et l'exemple 4 (Pd-SSZ-13). Les quantités de NOx désorbées par masse de catalyseur pendant la rampe de température ainsi que la température du maximum de désorption sont données ci-dessous :

**Table 2**

| | NOx [µmol/gcat] | Temp. [°C] |
|---|---|---|
| Pd-AFX1 | 83,3 | 395 |
| Pd-BEA | 63,9 | 333 |
| Pd-SSZ-13 | 62,6 | 310 |

Le catalyseur Pd-AFX1 synthétisé selon l'invention donne des performances très supérieures aux catalyseurs Pd-BEA et Pd-SSZ-13 synthétisés selon l'art antérieur en termes de quantité adsorbée et de température de désorption. La désorption des NOx n'apparait que vers 250°C pour le catalyseur Pd/AFX1 selon invention. Cette désorption de NOx supérieure à 250°C présente un avantage notable pour le contrôle des émissions de NOx.

### Exemple 9 : tests d'adsorption et désorption de NOx après vieillissement hydrothermal

Un test d'adsorption de NO à 120°C suivi d'une rampe de température à 10°C/min jusqu'à 600°C est réalisé avec l'exemple 2 vieilli suivant l'exemple 6 (Pd-AFX1 vieilli, selon l'invention), l'exemple 3 vieilli suivant l'exemple 6 (Pd-BEA vieilli) et l'exemple 4 vieilli suivant l'exemple 6 (Pd-SSZ-13 vieilli). Pour le test de chaque échantillon, 523 mg de catalyseur sous forme de poudre sont disposés dans un réacteur en quartz.
- Un préconditionnement est réalisé, il consiste en une montée en température depuis l'ambiant (20°C) jusqu'à 550°C avec une rampe de 10°C/min sous un mélange composé de 10% O₂, 5% CO₂, 10% H₂O et N₂ en complément. La descente en température se fait sous même mélange jusqu'à 120°C.
- L'adsorption est réalisée à 120°C sous mélange suivant : 200 ppm NO + 300 ppm CO + 5% CO₂+ 10% H₂O et N₂ en complément. La durée de cette phase d'adsorption est de 10 min.
- Pour desorber les NOx adsorber, l'échantillon subit une montée en température jusqu'à 550°C suivant une rampe de 10°C/min sous mélange 10% CO₂ + 10% H₂O et N₂ en complément

Un analyseur FTIR permet de mesurer la concentration des espèces NO, NO₂, NH₃, N₂O, CO, CO₂, H₂O, O₂ en sortie de réacteur

La figure 5 présente les concentrations en NOx désorbées pendant la rampe de température. La courbe marquée par des ronds, celle marquée par des croix et celle marquée par des triangles correspondent respectivement aux tests réalisés avec les catalyseurs vieillis suivant l'exemple 6 et synthétisés suivant l'exemple 2 (Pd-AFX1 vieilli), l'exemple 3 (Pd-BEA vieilli) et l'exemple 4 (Pd-SSZ-13 vieilli). Les quantités de NOx désorbées par masse de catalyseur pendant la rampe de température ainsi que la température du maximum de désorption sont données ci-dessous :

**Table 3**

| | NOx [µmol/gcat] | Temp. [°C] |
|---|---|---|
| Pd-AFX1 vieilli | 74,3 | 350 |
| Pd-BEA vieilli | 40,9 | 340 |
| Pd-SSZ-13 vieilli | 64,1 | 310 |

Le catalyseur Pd-AFX1 vieilli synthétisé selon l'invention donne des performances très supérieures aux catalyseurs Pd-BEA vieilli et Pd-SSZ-13 vieilli synthétisés selon l'art antérieur en termes de quantité adsorbée et de température de désorption. La désorption des NOx n'apparait que vers 250°C pour le catalyseur Pd/AFX1 vieilli selon invention. Cette désorption de NOx supérieure à 250°C présente un avantage notable pour le contrôle des émissions de NOx.

## Revendications

1. Procédé de préparation d'un catalyseur zéolithique comprenant une zéolithe de type structural AFX et du palladium, comprenant au moins les étapes suivantes :
i) le mélange en milieu aqueux, d'une zéolithe de type structural FAU ayant un ratio molaire total SiO_{2(FAU)}/Al₂O_{3(FAU)} compris entre 6 et 100, bornes incluses, d'un composé organique azoté MPC6, MPC6 étant le dihydroxyde de 1,6-bis(méthylpiperidinium)hexane, d'au moins une source de cations sodium, le mélange réactionnel présentant la composition molaire suivante :
(SiO_{2(FAU)})/(Al₂O_{3 (FAU)}) compris entre 6 et 100,
H₂O/(SiO_{2 (FAU)}) compris entre 5 et 60,
MPC6/(SiO_{2(FAU)}) compris entre 0,05 et 0,50,
Na₂O/(SiO_{2 (FAU)}) compris entre 0,05 et 0,25, bornes incluses,SiO_{2 (FAU)} désigne la quantité de SiO₂ apportée par la(les) zéolithe(s) FAU, et Al₂O_{3 (FAU)} désigne la quantité de Al₂O₃ apportée par la(les) zéolithe(s) FAU, jusqu'à l'obtention d'un gel précurseur homogène;
ii) le traitement hydrothermal dudit gel précurseur obtenu à l'issue de l'étape i) à une température comprise entre 120°C et 220°C, pendant une durée comprise entre 12h et 15 jours pour obtenir une zéolithe AFX
iii) une étape de filtration, lavage et séchage de ladite zéolithe AFX obtenue à l'issue de l'étape ii), ledit séchage étant réalisé à une température comprise entre 60 et 120°C, pendant une durée comprise entre 5 et 24 heures pour obtenir une zéolithe AFX séchée, suivie d'une calcination de ladite zéolithe AFX séchée à une température comprise entre 500 et 700°C pendant une durée comprise entre 2 et 20 heures, la calcination pouvant être précédée d'une montée en température progressive, pour obtenir une zéolithe AFX calcinée ;
iv) au moins une étape d'échange ionique de ladite zéolithe de type structural AFX calcinée obtenue à l'étape iii) comprenant la mise en contact de ladite zéolithe AFX calcinée obtenue à l'étape iii), avec une solution contenant des cations ammonium, de préférence du nitrate d'ammonium, sous agitation à une température comprise entre 20 et 95°C, de préférence entre 60 et 85°C pendant une durée comprise entre 1 heure et 2 jours pour obtenir une zéolithe AFX calcinée sous forme ammonium, qui est de nouveau séchée à une température comprise entre 60 et 120°C ;
v) dépôt d'une solution de palladium sur ladite zéolithe AFX calcinée sous forme ammonium et séchée.

2. Procédé selon la revendication 1 dans lequel la solution de palladium est déposée à l'étape v) par imprégnation à sec ou par voie colloïdale.

3. Procédé selon l'une des revendications 1 ou 2 dans lequel le mélange réactionnel de l'étape i) comprend au moins une source additionnelle de silicium sous forme oxyde SiO₂ notée SiO₂ (c), de sorte que le ratio molaire SiO_{2 (c)}/SiO_{2 (FAU)} soit compris entre 0,001 et 0,01, bornes incluses, la teneur en SiO_{2 (FAU)} dans ledit ratio étant la teneur apportée par la zéolithe de type structural FAU, le mélange réactionnel de l'étape i) ayant la composition molaire suivante :
(SiO_{2(c)} + SiO_{2 (FAU)}) /Al₂O_{3 (FAU)} compris entre 6 et 100
H₂O/(SiO_{2(c)} + SiO_{2 (FAU)}) compris entre 5 et 60
MPC6/(SiO_{2(c)} + SiO_{2(FAU)}) compris entre 0,05 et 0,50
Na₂O/(SiO_{2(c)} + SiO_{2 (FAU)}) compris entre 0,05 et 0,25, bornes incluses.

4. Procédé selon l'une des revendications 1 ou 2 dans lequel le mélange réactionnel de l'étape i) comprend au moins une source additionnelle d'aluminium sous forme oxyde notée : Al₂O₃ (c), de sorte que le ratio molaire Al₂O₃ (c) /Al₂O_{3 (FAU)} soit compris entre 0,001 et 8, bornes incluses, le mélange réactionnel de l'étape i) ayant la composition molaire suivante :
SiO_{2 (FAU)}/(Al₂O_{3 (FAU)} + Al₂O_{3 (C)}) compris entre 6 et 100, bornes incluses
H₂O/SiO_{2 (FAU)} compris entre 5 et 60
MPC6/SiO_{2 (FAU)} compris entre 0,05 et 0,50
Na₂O/SiO_{2 (FAU)} compris entre 0,05 et 0,25, bornes incluses,
SiO_{2 (FAU)} étant la quantité de SiO₂ apportée par la zéolithe FAU, Al₂O_{3 (FAU)} étant la quantité de Al₂O₃ apportée par la zéolithe FAU et Al₂O_{3 (C)} étant la quantité de Al₂O₃ apportée par la source additionnelle d'aluminium considéré sous sa forme oxyde, MPC6 étant le composé organique azoté 1,6-bis(méthylpiperidinium)hexane sous sa forme dihydroxyde.

5. Procédé selon l'une des revendications 1 ou 2 dans lequel le mélange réactionnel de l'étape i) contient :
- au moins une source additionnelle d'un oxyde SiO_{2 (c)}
- et au moins une source additionnelle d'un oxyde Al₂O_{3(c)},
la zéolithe FAU représentant entre 65 et 85% massique par rapport à la quantité totale des sources de de SiO₂ et d'Al₂O₃ sous forme anhydre présentes dans ledit mélange, et le mélange réactionnel présentant la composition molaire suivante :
(SiO_{2(c)} + SiO_{2 (FAU)})/(Al₂O_{3 (FAU)} + Al₂O_{3(c)}) compris entre 6 et 100
H₂O/(SiO_{2(c)} + SiO_{2 (FAU)}) compris entre 5 et 60
MPC6/(SiO_{2(c)} + SiO_{2(FAU)}) compris entre 0,05 et 0,50
Na₂O/(SiO_{2 (c)} + SiO_{2 (FAU)}) compris entre 0,05 et 0,25, bornes incluses.

6. Procédé selon la revendication 4 ou 5 dans lequel ladite source d'aluminium additionnelle est choisie parmi l'hydroxyde d'aluminium ou un sel d'aluminium, un aluminate de sodium, un alkoxyde d'aluminium, ou de l'alumine pris seuls ou en mélange, de préférence ladite source d'aluminium conventionnelle est l'hydroxyde d'aluminium.

7. Procédé selon l'une des revendications précédentes dans lequel la source de cations sodium est l'hydroxyde de sodium.

8. Procédé selon l'une des revendications précédentes dans lequel on ajoute des germes cristallins d'une zéolithe de type structural AFX au mélange réactionnel de l'étape i), en quantité comprise entre 0,01 et 10% poids par rapport à la masse totale des sources de SiO₂ et d'Al₂O₃ sous forme anhydre présentes dans ledit mélange, lesdits germes cristallins n'étant pas pris en compte dans la masse totale des sources de SiO₂ et d'Al₂O₃

9. Procédé selon l'une des revendications précédentes dans lequel l'étape i) comprend une étape de mûrissement du mélange réactionnel à une température comprise entre 20 et 100°C, avec ou sans agitation, pendant une durée comprise entre 30 minutes et 48 heures.

10. Procédé selon l'une des revendications précédentes dans lequel la teneur en palladium introduite par l'étape de dépôt v) est comprise entre 0,5 à 5% massique, de préférence entre 0,8 et 3% massique, de manière plus préférée entre 0,9 et 2% massique, très avantageusement autour de 1% massique par rapport à la masse totale du catalyseur anhydre.

11. Catalyseur zéolithique AFX contenant du palladium obtenu par le procédé selon l'une des revendications 1 à 10.

12. Catalyseur zéolithique AFX selon la revendication 11 dont le rapport SiO₂/Al₂O₃ est compris entre 7 et 20, bornes incluses, de préférence entre 8 et 16, bornes incluses.

13. Catalyseur zéolithique AFX selon l'une des revendications 11 à 12 dans lequel la teneur en palladium est comprise entre 0,5 à 5% massique, de préférence entre 0,8 et 3% massique, de manière plus préférée entre 0,9 et 2% massique, très avantageusement autour de 1% massique par rapport à la masse totale du catalyseur final anhydre, et la dispersion métallique du palladium mesurée par chimisorption du CO est comprise entre 40 et 100%, de préférence entre 50 et 100%.

14. Utilisation du catalyseur selon l'une des revendications 11 à 13 ou obtenu par le procédé selon l'une quelconque des revendications 1 à 10, pour la réduction sélective de NOₓ par un réducteur tel que NH₃ ou H₂.

15. Utilisation selon la revendication 14, pour laquelle le catalyseur est mis en forme par dépôt sous forme de revêtement sur une structure nid d'abeilles ou une structure à plaques.

16. Utilisation selon la revendication 15, pour laquelle la structure nid d'abeilles est formée de canaux parallèles ouverts aux deux extrémités ou comporte des parois poreuses filtrantes pour lesquelles les canaux parallèles adjacents sont alternativement bouchés de part et d'autre des canaux.

17. Utilisation selon la revendication 16, pour laquelle la quantité de catalyseur déposé sur ladite structure est comprise entre 50 à 240 g/L pour les structures filtrantes et entre 80 et 320 g/L pour les structures avec canaux ouverts.

18. Utilisation selon l'une des revendications 15 à 17, pour laquelle le catalyseur est associé à un liant tel que la cérine, l'oxyde de zirconium, l'alumine, la silice-alumine non zéolithique, l'oxyde de titane, un oxyde mixte de type cerine-zircone, un oxyde de tungstène et/ou une spinelle pour être mis en forme par dépôt sous forme de revêtement.

19. Utilisation selon l'une des revendications 15 à 18, pour laquelle ledit revêtement est associé à un autre revêtement présentant des capacités d'adsorption de polluants en particulier de NOx, de réduction de polluants en particulier des NOx ou favorisant l'oxydation de polluants.

20. Utilisation selon la revendication 14, pour laquelle ledit catalyseur est sous forme d'extrudé, contenant jusqu'à 100% dudit catalyseur.

21. Utilisation selon l'une des revendications 14 à 20, pour laquelle la structure revêtue par ledit catalyseur ou obtenue par extrusion dudit catalyseur est intégrée dans une ligne d'échappement d'un moteur à combustion interne.

## Patentansprüche

1. Verfahren zur Herstellung eines Zeolithkatalysators, der einen Zeolith vom AFX-Strukturtyp und Palladium umfasst, das mindestens die folgenden Schritte umfasst:
i) Mischen eines Zeoliths vom FAU-Strukturtyp mit einem Gesamtmolverhältnis SiO_{2(FAU)}/Al₂O_{3(FAU)} zwischen 6 und 100, Grenzen eingeschlossen, einer organischen Stickstoffverbindung MPC6, wobei es sich bei MPC6 um 1,6-Bis(methylpiperidinium)hexandihydroxid handelt, und mindestens einer Quelle von Natriumkationen in wässrigem Medium, wobei die Reaktionsmischung die folgende molare Zusammensetzung aufweist:
(SiO_{2(FAU)})/(Al₂O_{3(FAU)}) zwischen 6 und 100,
H₂O/(SiO_{2(FAU)}) zwischen 5 und 60,
MPC6/(SiO_{2(FAU)}) zwischen 0,05 und 0,50,
Na₂O/(SiO_{2(FAU)}) zwischen 0,05 und 0,25, Grenzen eingeschlossen, wobei SiO_{2(FAU)} die von dem FAU-Zeolith bzw. den FAU-Zeolithen bereitgestellte Menge von SiO₂ bedeutet und Al₂O_{3(FAU)} die von dem FAU-Zeolith bzw. den FAU-Zeolithen bereitgestellte Menge von Al₂O₃ bedeutet, bis zum Erhalt eines homogenen Vorläufergels;
ii) hydrothermale Behandlung des am Ende von Schritt i) erhaltenen Vorläufergels bei einer Temperatur zwischen 120 °C und 220 °C über einen Zeitraum zwischen 12 h und 15 Tagen zum Erhalt eines AFX-Zeoliths;
iii) einen Schritt des Filtrierens, des Waschens und des Trocknens des am Ende von Schritt ii) erhaltenen AFX-Zeoliths, wobei das Trocknen bei einer Temperatur zwischen 60 und 120 °C über einen Zeitraum zwischen 5 und 24 Stunden erfolgt, zum Erhalt eines getrockneten AFX-Zeoliths, gefolgt von einer Calcinierung des getrockneten AFX-Zeoliths bei einer Temperatur zwischen 500 und 700 °C über einen Zeitraum zwischen 2 und 20 Stunden, wobei der Calcinierung eine allmähliche Temperatursteigerung vorgeschaltet sein kann, zum Erhalt eines calcinierten AFX-Zeoliths;
iv) mindestens einen Schritt des Ionenaustauschs des in Schritt iii) erhaltenen calcinierten Zeoliths vom AFX-Strukturtyp, umfassend das Inkontaktbringen des in Schritt iii) erhaltenen calcinierten AFX-Zeoliths mit einer Lösung, die Ammoniumkationen, vorzugsweise Ammoniumnitrat, enthält, unter Rühren bei einer Temperatur zwischen 20 und 95 °C, vorzugsweise zwischen 60 und 85 °C, über einen Zeitraum zwischen 1 Stunde und 2 Tagen zum Erhalt eines calcinierten AFX-Zeoliths in Ammoniumform, der erneut bei einer Temperatur zwischen 60 und 120 °C getrocknet wird;
v) Abscheiden einer Palladiumlösung auf dem in Ammoniumform calcinierten und getrockneten AFX-Zeolith.

2. Verfahren nach Anspruch 1, wobei die Palladiumlösung in Schritt v) durch Trockenimprägnierung oder auf kolloidalem Wege abgeschieden wird.

3. Verfahren nach Anspruch 1 oder Anspruch 2, wobei die Reaktionsmischung von Schritt i) mindestens eine zusätzliche Quelle von Silicium in Oxidform SiO₂, die als SiO_{2(c)} bezeichnet wird, umfasst, so dass das molare Verhältnis SiO_{2(c)}/SiO_{2(FAU)} zwischen 0,001 und 0,01, Grenzen eingeschlossen, liegt, wobei der Gehalt von SiO_{2(FAU)} in diesem Verhältnis der von dem Zeolith vom FAU-Strukturtyp bereitgestellte Gehalt ist, wobei die Reaktionsmischung von Schritt i) die folgende molare Zusammensetzung aufweist:
(SiO_{2(c)} + SiO_{2(FAU)}) /Al₂O_{3(FAU)} zwischen 6 und 100
H₂O/(SiO_{2(c)} + SiO_{2(FAU)}) zwischen 5 und 60
MPC6/(SiO_{2(c)} + SiO_{2(FAU)}) zwischen 0,05 und 0,50
Na₂O/(SiO_{2(c)} + SiO_{2(FAU)}) zwischen 0,05 und 0,25, Grenzen eingeschlossen.

4. Verfahren nach Anspruch 1 oder Anspruch 2, wobei die Reaktionsmischung von Schritt i) mindestens eine zusätzliche Quelle von Aluminium in Oxidform, die als Al_{2O3}(_{c}) bezeichnet wird, umfasst, so dass das molare Verhältnis Al₂O_{3(c)}/Al₂O_{3(FAU)} zwischen 0,001 und 8, Grenzen eingeschlossen, liegt, wobei die Reaktionsmischung von Schritt i) die folgende molare Zusammensetzung aufweist:
SiO_{2(FAU)}/(Al₂O_{3(FAU)} + Al₂O_{3(C)}) zwischen 6 und 100, Grenzen eingeschlossen,
H₂O/SiO_{2(FAU)} zwischen 5 und 60
MPC6/(SiO_{2(FAU)}) zwischen 0,05 und 0,50
Na₂O/SiO_{2(FAU)} zwischen 0,05 und 0,25, Grenzen eingeschlossen,
wobei SiO_{2(FAU)} die von dem FAU-Zeolith bereitgestellte Menge von SiO₂ ist, Al₂O_{3(FAU)} die von dem FAU-Zeolith bereitgestellte Menge von Al₂O₃ ist und Al₂O_{3(C)} die von der zusätzlichen Quelle von Aluminium, das in seiner Oxidform betrachtet wird, bereitgestellte Menge von Al₂O₃ ist, wobei es sich bei MPC6 um die organische Stickstoffverbindung 1,6-Bis(methylpiperidinium)hexan in ihrer Dihydroxidform handelt.

5. Verfahren nach Anspruch 1 oder 2, wobei die Reaktionsmischung von Schritt i) Folgendes enthält:
- mindestens eine zusätzliche Quelle eines Oxids SiO_{2(c)}
- und mindestens eine zusätzliche Quelle eines Oxids Al₂O_{3(c)},
wobei der FAU-Zeolith zwischen 65 und 85 Massen-%, bezogen auf die Gesamtmenge der Quellen von SiO₂ und Al₂O₃ in wasserfreier Form, die in der Mischung vorliegen, ausmacht und die Reaktionsmischung die folgende molare Zusammensetzung aufweist:
(SiO_{2(c)} + SiO_{2(FAU)})/(Al₂O_{3(FAU)} + Al₂O_{3(c)}) zwischen 6 und 100
H₂O/(SiO_{2(c)} + SiO_{2(FAU)}) zwischen 5 und 60
MPC6/(SiO_{2(c)} + SiO_{2(FAU)}) zwischen 0,05 und 0,50
Na₂O/(SiO_{2(c)} + SiO_{2(FAU)}) zwischen 0,05 und 0,25, Grenzen eingeschlossen.

6. Verfahren nach Anspruch 4 oder 5, wobei die zusätzliche Quelle von Aluminium aus Aluminiumhydroxid oder einem Aluminiumsalz, einem Natriumaluminat, einem Aluminiumalkoxid oder Aluminiumoxid allein oder in einer Mischung ausgewählt ist und es sich bei der herkömmlichen Quelle von Aluminium vorzugsweise um Aluminiumhydroxid handelt.

7. Verfahren nach einem der vorhergehenden Ansprüche, wobei es sich bei der Quelle von Natriumkationen um Natriumhydroxid handelt.

8. Verfahren nach einem der vorhergehenden Ansprüche, bei dem man Kristallkeime eines Zeoliths vom AFX-Strukturtyp in einer Menge zwischen 0,01 und 10 Gew.-%, bezogen auf die Gesamtmasse der Quellen von SiO₂ und Al₂O₃ in wasserfreier Form, die in der Mischung vorliegen, zu der Reaktionsmischung von Schritt i) gibt, wobei die Kristallkeime in der Gesamtmasse der Quellen von SiO₂ und Al₂O₃ nicht berücksichtigt werden.

9. Verfahren nach einem der vorhergehenden Ansprüche, wobei der Schritt i) einen Schritt der Reifung der Reaktionsmischung bei einer Temperatur zwischen 20 und 100 °C mit oder ohne Rühren über einen Zeitraum zwischen 30 Minuten und 48 Stunden umfasst.

10. Verfahren nach einem der vorhergehenden Ansprüche, wobei der Gehalt an Palladium, das durch den Aufbringungsschritt v) eingeführt wird, zwischen 0,5 und 5 Massen-%, vorzugsweise zwischen 0,8 und 3 Massen-%, weiter bevorzugt zwischen 0,9 und 2 Massen-%, sehr vorteilhaft ungefähr 1 Massen-%, bezogen auf die Gesamtmasse des wasserfreien Katalysators, liegt.

11. Palladiumhaltiger AFX-Zeolithkatalysator, erhalten durch das Verfahren nach einem der Ansprüche 1 bis 10.

12. AFX-Zeolithkatalysator nach Anspruch 11, wobei das SiO₂/Al₂O₃-Verhältnis zwischen 7 und 20, Grenzen eingeschlossen, vorzugsweise zwischen 8 und 16, Grenzen eingeschlossen, liegt.

13. AFX-Zeolithkatalysator nach einem der Ansprüche 11 bis 12, wobei der Palladiumgehalt zwischen 0,5 und 5 Massen-%, vorzugsweise zwischen 0,8 und 3 Massen-%, weiter bevorzugt zwischen 0,9 und 2 Massen-%, sehr vorteilhaft ungefähr 1 Massen-%, bezogen auf die Gesamtmasse des fertigen wasserfreien Katalysators, liegt und die durch CO-Chemisorption gemessene Metalldispersion des Palladiums zwischen 40 und 100 %, vorzugsweise zwischen 50 und 100 %, liegt.

14. Verwendung des Katalysators nach einem der Ansprüche 11 bis 13 oder des durch das Verfahren nach einem der Ansprüche 1 bis 10 erhaltenen Katalysators zur selektiven Reduktion von NOₓ durch ein Reduktionsmittel wie NH₃ oder H₂.

15. Verwendung nach Anspruch 14, für die der Katalysator durch Abscheidung in Form einer Beschichtung auf einer Wabenstruktur oder einer Plattenstruktur geformt ist.

16. Verwendung nach Anspruch 15, für die die Wabenstruktur aus an beiden Seiten offenen parallelen Kanälen gebildet ist oder poröse filtrierende Wände aufweist, für die die benachbarten parallelen Kanäle auf beiden Seiten der Kanäle abwechselnd verstopft sind.

17. Verwendung nach Anspruch 16, für die die auf der Struktur abgeschiedene Katalysatormenge zwischen 50 und 240 g/l für die filtrierenden Strukturen und zwischen 80 und 320 g/l für die Strukturen mit offenen Kanälen liegt.

18. Verwendung nach einem der Ansprüche 15 bis 17, für die der Katalysator zum Formen durch Abscheidung in Form einer Beschichtung mit einem Bindemittel wie Ceroxid, Zirconiumoxid, Aluminiumoxid, nichtzeolithischem Siliciumdioxid-Aluminiumoxid, Titanoxid, einem Ceroxid-Zirconiumoxid-Mischoxid, einem Wolframoxid und/oder einem Spinell kombiniert ist.

19. Verwendung nach einem der Ansprüche 15 bis 18, für die die Beschichtung mit einer weiteren Beschichtung, die die Fähigkeiten besitzt, Schadstoffe, insbesondere NOx, zu adsorbieren, Schadstoffe, insbesondere NOx, zu reduzieren oder die Oxidation von Schadstoffen zu fördern.

20. Verwendung nach Anspruch 14, für die der Katalysator in Form eines Extrudats, das bis zu 100 % des Katalysators enthält, vorliegt.

21. Verwendung nach einem der Ansprüche 14 bis 20, für die die mit dem Katalysator beschichtete oder durch Extrusion des Katalysators erhaltene Struktur in eine Abgasleitung eines Verbrennungsmotors integriert ist.

## Claims

1. Process for preparing a zeolite catalyst comprising a zeolite of AFX structural type and palladium, comprising at least the following steps:
i) the mixing, in an aqueous medium, of a zeolite of FAU structural type having a total SiO_{2 (FAU)}/Al₂O_{3 (FAU)} molar ratio of between 6 and 100, limits included, an organic nitrogenous compound MPC6, MPC6 being 1,6-bis(methylpiperidinium)hexane dihydroxide, at least one source of sodium cations, the reaction mixture having the following molar composition:
(SiO_{2(FAU)})/(Al₂O_{3 (FAU)}) of between 6 and 100,
H₂O/(SiO_{2 (FAU)}) of between 5 and 60,
MPC6/(SiO_{2(FAU)}) of between 0.05 and 0.50,
Na₂O/(SiO_{2 (FAU)}) of between 0.05 and 0.25, limits included, SiO_{2 (FAU)} denotes the amount of SiO₂ provided by the FAU zeolite(s) and Al₂O_{3 (FAU)} denotes the amount of Al₂O₃ provided by the FAU zeolite(s), until a homogeneous precursor gel is obtained;
ii) the hydrothermal treatment of said precursor gel obtained on conclusion of step i) at a temperature of between 120°C and 220°C, for a time of between 12 h and 15 days, in order to obtain an AFX zeolite;
iii) a step of filtration, washing and drying of said AFX zeolite obtained on conclusion of step ii), said drying being carried out at a temperature of between 60 and 120°C, for a time of between 5 and 24 hours, in order to obtain a dried AFX zeolite, followed by calcination of said dried AFX zeolite at a temperature of between 500 and 700°C for a time of between 2 and 20 hours, the calcination possibly being preceded by a gradual increase in temperature, in order to obtain a calcined AFX zeolite;
iv) at least one step of ion exchange of said calcined zeolite of AFX structural type obtained in step iii), comprising bringing said calcined AFX zeolite obtained in step iii) into contact with a solution containing ammonium cations, preferably ammonium nitrate, with stirring at a temperature of between 20 and 95°C, preferably between 60 and 85°C, for a time of between 1 hour and 2 days, in order to obtain a calcined AFX zeolite in ammonium form, which is again dried at a temperature of between 60 and 120°C;
v) deposition of a palladium solution on said ammonium-form calcined and dried AFX zeolite.

2. Process according to Claim 1, wherein the palladium solution is deposited in step v) by dry impregnation or via a colloidal route.

3. Process according to either of Claims 1 and 2, wherein the reaction mixture of step i) comprises at least one additional source of silicon in oxide form SiO₂, denoted SiO₂ (c), such that the SiO_{2 (c)}/SiO_{2 (FAU)} molar ratio is between 0.001 and 0.01, limits included, the content of SiO_{2 (FAU)} in said ratio being the content provided by the zeolite of FAU structural type, the reaction mixture of step i) having the following molar composition:
(SiO_{2(c)} + SiO_{2 (FAU)})/Al₂O_{3(FAU)} of between 6 and 100,
H₂O/(SiO_{2 (c)} + SiO_{2 (FAU)}) of between 5 and 60,
MPC6/(SiO_{2 (c)} + SiO_{2 (FAU)}) of between 0.05 and 0.50,
Na₂O/(SiO_{2 (c)} + SiO_{2 (FAU)}) of between 0.05 and 0.25, limits included.

4. Process according to either of Claims 1 and 2, wherein the reaction mixture of step i) comprises at least one additional source of aluminum in oxide form, denoted: Al₂O_{3 (C)}, such that the Al₂O_{3 (c)} /Al₂O_{3 (FAU)} molar ratio is between 0.001 and 8, limits included, the reaction mixture of step i) having the following molar composition:
SiO_{2 (FAU)}/(Al₂O_{3(FAU)} + Al₂O_{3 (C)}) of between 6 and 100, limits included,
H₂O/SiO_{2 (FAU)} of between 5 and 60,
MPC6/SiO_{2 (FAU)} of between 0.05 and 0.50,
Na₂O/SiO_{2 (FAU)} of between 0.05 and 0.25, limits included,
SiO_{2 (FAU)} being the amount of SiO₂ provided by the FAU zeolite, Al₂O_{3 (FAU)} being the amount of Al₂O₃ provided by the FAU zeolite and Al₂O_{3 (c)} being the amount of Al₂O₃ provided by the additional source of aluminum considered in its oxide form, MPC6 being the organic nitrogenous compound 1,6-bis(methylpiperidinium)hexane in its dihydroxide form.

5. Process according to either of Claims 1 and 2, wherein the reaction mixture of step i) contains:
- at least one additional source of an oxide SiO_{2 (c)},
- and at least one additional source of an oxide Al₂O_{3 (c)},
the **FAU zeolite** representing between 65% and 85% by mass relative to the total amount of the sources of SiO₂ and Al₂O₃ in anhydrous form present in said mixture, and the reaction mixture having the following molar composition:
(SiO_{2(c)} + SiO_{2 (FAU)})/(Al₂O_{3 (FAU)} + Al₂O_{3 (c)}) of between 6 and 100,
H₂O/(SiO_{2 (c)} + SiO_{2 (FAU)}) of between 5 and 60,
MPC6/(SiO_{2(c)} + SiO_{2 (FAU)}) of between 0.05 and 0.50,
Na₂O/(SiO_{2 (c)} + SiO_{2 (FAU)}) of between 0.05 and 0.25, limits included.

6. Process according to Claim 4 or 5, wherein said additional source of aluminum is selected from aluminum hydroxide or an aluminum salt, a sodium aluminate, an aluminum alkoxide, or alumina, taken alone or in a mixture, preferably said conventional source of aluminum is aluminum hydroxide.

7. Process according to one of the preceding claims, wherein the source of sodium cations is sodium hydroxide.

8. Process according to one of the preceding claims, wherein seed crystals of a zeolite of AFX structural type are added to the reaction mixture of step i), in an amount of between 0.01% and 10% by weight relative to the total mass of the sources of SiO₂ and Al₂O₃ in anhydrous form present in said mixture, said seed crystals not being taken into account in the total mass of the sources of SiO₂ and Al₂O₃.

9. Process according to one of the preceding claims, wherein step i) comprises a step of maturing the reaction mixture at a temperature of between 20 and 100°C, with or without stirring, for a period of between 30 minutes and 48 hours.

10. Process according to one of the preceding claims, wherein the content of palladium introduced by the deposition step v) is between 0.5% to 5% by mass, preferably between 0.8% and 3% by mass, more preferably between 0.9% and 2% by mass, very advantageously around 1% by mass, relative to the total mass of the anhydrous catalyst.

11. AFX zeolite catalyst containing palladium, obtained by the process according to one of Claims 1 to 10.

12. AFX zeolite catalyst according to Claim 11, the SiO₂/Al₂O₃ ratio of which is between 7 and 20, limits included, preferably between 8 and 16, limits included.

13. AFX zeolite catalyst according to either of Claims 11 and 12, wherein the palladium content is between 0.5% to 5% by mass, preferably between 0.8% and 3% by mass, more preferably between 0.9% and 2% by mass, very advantageously around 1% by mass, relative to the total mass of the anhydrous final catalyst, and the metallic dispersion of the palladium, measured by CO chemisorption, is between 40% and 100%, preferably between 50% and 100%.

14. Use of the catalyst according to one of Claims 11 to 13 or obtained by the process according to any one of Claims 1 to 10, for the selective reduction of NOₓ by a reducing agent such as NH₃ or H₂.

15. Use according to Claim 14, for which the catalyst is formed by deposition in the form of a coating on a honeycomb structure or a plate structure.

16. Use according to Claim 15, for which the honeycomb structure is formed by parallel channels open at both ends or comprises porous filtering walls for which the adjacent parallel channels are alternately blocked at either end of the channels.

17. Use according to Claim 16, for which the amount of catalyst that is deposited on said structure is between 50 to 240 g/L for filtering structures and between 80 and 320 g/L for structures with open channels.

18. Use according to one of Claims 15 to 17, for which the catalyst is combined with a binder such as ceria, zirconium oxide, alumina, non-zeolitic silica-alumina, titanium oxide, a mixed oxide of ceria-zirconia type, a tungsten oxide and/or a spinel in order to be formed by deposition in the form of a coating.

19. Use according to one of Claims 15 to 18, for which said coating is combined with another coating having the capacity to adsorb pollutants, in particular NOx, to reduce pollutants, in particular NOx, or to promote the oxidation of pollutants.

20. Use according to Claim 14, for which said catalyst is in the form of an extrudate, containing up to 100% of said catalyst.

21. Use according to one of Claims 14 to 20, for which the structure coated with said catalyst or obtained by extrusion of said catalyst is integrated into an exhaust line of an internal combustion engine.
